(19) Europäisches Patentamt
European Patent Office
Office européen des brevets

(11) **EP 2 426 019 A2**

(12) **EUROPÄISCHE PATENTANMELDUNG**

(43) Veröffentlichungstag:
**07.03.2012 Patentblatt 2012/10**

(21) Anmeldenummer: **11006126.4**

(22) Anmeldetag: **26.07.2011**

(51) Int Cl.:
*B60T 8/32* (2006.01)   *B60T 8/26* (2006.01)
*B60T 11/20* (2006.01)   *B60L 7/24* (2006.01)
*B60T 13/58* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.09.2010 DE 102010044920**
**23.11.2010 DE 102010052292**

(71) Anmelder: **IAV GmbH**
**10587 Berlin (DE)**

(72) Erfinder:
 • **Müller, Achim**
 **38518 Gifhorn (DE)**

 • **Lahmann, Thorsten**
 **38527 Meine (DE)**
 • **Dittrich, Marco**
 **38518 Gifhorn (DE)**
 • **Thomasius, Eyk**
 **38518 Gifhorn (DE)**

(74) Vertreter: **Buss, Fritz Gerd**
**IAV GmbH**
**Ingenieurgesellschaft Auto und Verkehr**
**Kauffahrtei 25**
**09120 Chemnitz (DE)**

(54) **Bremskraftverteilungsvorrichtung für Hybrid- und Elektrofahrzeuge**

(57) Die vorliegende Erfindung betrifft eine Vorrichtung zur Verteilung einer Bremskraft für ein Bremssystem. Aufgabe der Erfindung ist es, eine variable Verteilung einer Bremskraft in einem hydraulisch-mechanischen Bremssystem bereitzustellen, das zum Beispiel in Hybrid- und Elektromotoren zum Einsatz kommt. Gelöst wird die Aufgabe durch die Verwendung eines Verstellsystems (WB), dessen Verteilungsverhältnis $\dfrac{AP - A1}{AP - A2}$ über ein Stellglied (SG) verschoben werden kann und sich somit unterschiedliche Verteilungsverhältnisse einstellen lassen. Dadurch wird eine Bremskraft zwischen einer Simulator-Einheit (SE) und einer hydraulisch-mechanischen Reibbremse verteilt. Die in dem Bremskraftsimulator (SE) kompensierte Bremskraft wird durch ein Regenerativbremsmoment eines zusätzlichen Bremssystems ersetzt. Die Vorrichtung erlaubt eine variable Reduzierung des Bremsmomentes des hydraulisch-mechanischen Bremssystems in Abhängigkeit vom Regenerativbremsmoment, ohne dass sich das Bremsgefühl für den Fahrer verändert.

*FIG. 1*

EP 2 426 019 A2

**Beschreibung**

Die vorliegende Erfindung betrifft eine Vorrichtung zur Verteilung einer Bremskraft für ein Bremssystem nach den Merkmalen des Patentanspruchs 1.

In der Patentschrift DE 24 53 573 C2 wird eine Bremsbetätigungsvorrichtung beschrieben, bei der die Bremskraft, die über ein fremdbetätigtes Bremspedal erzeugt wird, über einen Waagebalken auf die Räder der Vorderachse und die Räder der Hinterachse in einer Hydraulikbremsanlage verteilt wird.

Neben klassischen Hydraulikbremsanlagen, bei denen der Bremsdruck über ein fremdbetätigtes Bremspedal erzeugt wird, sind auch sogenannte Brake-By-Wire-Bremssysteme bekannt und kommen immer häufiger zum Einsatz.

Bei diesen Brake-By-Wire-Bremssystemen wird der Bremsdruck zum Beispiel über: Hydraulikpumpen erzeugt und in Druckspeichern zwischengespeichert. Der Vorteil dieser Bremssysteme liegt darin, dass die Bremsleistung in einfacher Weise auf die einzelnen Fahrzeugräder verteilt werden kann, ohne dass sich eine negative Rückwirkung auf das Bremsgefühl des Fahrers einstellt.

In der Offentegungsschrift DE 10 2007 037 357 A1 wird ein Verfahren zum Betrieb eines Bremssystems beschrieben, bei dem die Bremswirkung von einer Steuerung auf eine Bremsanlage und eine Antriebsbremse in Stufen oder stufenlos aufgeteilt wird.

Besonders interessant wird die Verwendung der Brake-By-Wire-Bremssysteme in Hybrid- und Elektrofahrzeugen, die sowohl über ein hydraulisch-mechanisches Bremssystem verfügen und weiterhin die Möglichkeit haben, über Elektromotoren Im Generatorbetrieb ein Bremsmoment für ein rekuperatives Bremsen zu erzeugen. Bekannte Rekuperationssysteme sind derart ausgelegt, dass nur ein kleiner Teil der Bremsenergie über die Generatoren zurückgewonnen werden kann. Um den Gesamtverbrauch und somit den Wirkungsgrad des Fahrzeugs weiter zu vermindern, ist es vorteilhaft, die Energierückgewinnung zu optimieren, indem die Aufteilung des Bremsmomentes zwischen hydraulisch-mechanischen und regenerativen Bremssystemen variabel eingestellt wird. Das Bremsmoment des Generators kann optimal an die Systembedingungen angepasst werden.

Als großen Nachteil der Brake-By-Wire-Bremssysteme ist die Abhängigkeit des Systems von der Funktionssicherheit der Fahrzeugelektronik zu nennen. Weiterhin wird stets ein sekundäres Bremssystem gefordert, um im Falle einer Fehlfunktion des Brake-By-Wire-Bremssystems ein rein mechanisches Bremsen zu ermöglichen.

Ein weiteres Bremssystem, das in Hybrld- und Elektrofahrzeugen zum Einsatz kommt, um vor allem den Nachteil des Brake-By-Wire-Bremssystems zu umgehen, besteht aus einem hydraulisch-mechanischen Bremssystem, bei dem der Bremsdruck Ober ein fremdbetätigtes Bremspedal erzeugt wird. Die Besonderheit dieses Bremssystems gegenüber dem klassischen System liegt darin, dass die Anpassung der Bremsleistung an das regenerative Bremsmoment über einen Druckspeicher geregelt wird. Es wird ein bestimmter Teil des über Muskelkraft erzeugten Bremsdrucks in dem Druckspeicher gespeichert und durch das Regenerativbremsmoment ersetzt.

In der japanischen Patentveröffentlichung JP 3775109 B2 ist ein Bremssystem, bestehend aus einem hydraulischen System und einem regenerativen System mit zusätzlicher Antiblockiereinheit, beschrieben. Im Bremssystem ist ein Absorptionszylinder vorgesehen, in dem der überflüssige Druck im hydraulischen System beim regenerativen Bremsen über ein Schaltventil abgeführt wird.

Solche Systeme sind mit besonders hohem Aufwand im hydraulischen Bremskreis und in der Steuerung verbunden. Teilweise sind zusätzliche geregelte Pedalsimulatoren notwendig, die einen Bremsdruck im Bremspedal simulieren, um dem Fahrer ein gleichbleibendes Bremsgefühl zu vermitteln.

**Aufgabe der Erfindung**

Die Aufgabe der Erfindung besteht darin ein Bremssystem zu schaffen, dass dem Fahrer eines Hybrid- oder Elektrofahrzeuges in einfacher Weise ein gleichbleibendes Bremsgefühl unabhängig vom Anteil eines Regenerativbremsmomentes an einem Gesamtbremsmoment vermittelt. Das Bremssystem soll über eine hohe Funktionssicherheit verfügen.

Die Aufgabe wird durch die Vorrichtung nach den Merkmalen des Patentanspruches 1 gelöst.

**Beschreibung der Erfindung**

Die Erfindung stellt eine Vorrichtung bereit, die in einem hydraulisch-mechanischen Bremssystem angeordnet ist und die vom Fahrer über ein Bremspedal erzeugte Bremskraft reduziert, indem die Bremskraft variabel verteilt wird, wobei die Möglichkeit besteht nur einen Anteil der erzeugten Bremskraft in das Bremssystem einzuleiten: Der verbleibende Anteil der Bremskraft wird in eine Simulator-Einheit abgeleitet. Dadurch wird das Bremsmoment in der als Reibbremse ausgebildeten herkömmlichen Betriebsbremse reduziert. Die Reduktion der Bremskraft der herkömmlichen Betriebsbremse wird dann notwendig, wenn, beispielsweise durch generatorisches Bremsen einer Elektromaschine, ein zusätzliches regeneratives Bremsmoment erzeugt wird.

Die Vorrichtung beinhaltet ein mechanisches Verstellsystem, welches eine einstellbare Übersetzung aufweist und ein Bremspedal direkt oder indirekt mit einer Simulatoreinheit und einem Hydraulikbremskreis verbindet.

Die Vorrichtung ermöglicht die Verteilung einer vom Fahrer über ein Bremspedal erzeugten Bremskraft in einem hydraulisch-mechanischen, Bremssystem durch Nutzung eines Verstellsystems, das über wenigstens einen Angriffspunkt und wenigstens zwei Abgriffspunkte verfügt. Erfindungsgemäß vorteilhaft ist das Verteilungsverhältnis der Bremskraft und / oder des Betätigungsweges des Verstellsystems durch Verlagern von Angriffs- und / oder Abgriffspunkten einstellbar. Es ergibt sich damit durch Verlagern der Angriffs- und / oder Abgriffspunkte eine variable Übertragung der vom Fahrer über ein Bremspedal erzeugten Bremskraft auf das hydraulisch-mechanische Bremssystem. Es wird dabei ein zur tatsächlich auf das Fahrzeug wirkenden Bremskraft proportionales Widerstandsmoment am Bremspedal durch Nutzung des Verstellsystems erzeugt, indem das Widerstandsmoment einer Simulatoreinheit in das variable Verstellsystem eingeleitet und auf das Bremspedal übertragen wird. Dadurch ergibt sich für den Fahren unabhängig vom Anteil des Bremsmomentes der Betriebsbremse am Gesamtbremsmoment ein gleichbleibender Pedalwiderstand, also ein gleichbleibendes Pedalgefühl.

Für den Einsatz in Hybrid- und Elektrofahrzeugen wird die Bremskraft, die vom Fahrer über ein Bremspedal erzeugt wird, über ein Element des Hebelsystems, z.B. den Waagebalken, auf einen Hydraulikbremskreis und auf eine Simulator-Einheit verteilt,

In einer bevorzugten Ausgestaltung beinhaltet das Hebelsystem ein Element, welches In Form eines Waagebalkens ausgeführt ist, der zwei Abgriffspunkte verbindet und vom Bremspedal zwischen diesen Abgriffspunkten belastet wird. Eine einfache Verteilung der Bremskraft wird ermöglicht, indem eine Kraft durch das Bremspedal auf einen Angriffspunkt des Waagebalkens eingeleitet und auf zwei Abgriffspunkte weitergeleitet wird. Die Bremskraft, die von dem Waagebalken verteilt werden soll, kann zum Beispiel aus einem Hydraulikdruck eines primären Bremskreises erzeugt werden, der wiederum über einen Bremszylinder durch die Betätigung eines Bremspedals erzeugt wurde. Der Waagebalken kann jedoch auch direkt an einem Bremspedal angeordnet sein und die vom Fahrer erzeugte Bremskraft auf den Bremszylinder oder Bremskraftverstärker und auf eine Simulator-Einheit verteilen.

Die variable Verteilung der Bremskraft wird dadurch erreicht, dass der Angriffspunkt, an dem die Kraft eingeleitet wird, verschoben wird. Dadurch verändern sich die Hebelarme vom Angriffspunkt zu den Abgriffspunkten und somit das HebelverhätnisHebelverhältnis und damit das Verhältnis der Kraftverteilung. Die Verschiebung des Angriffspunktes erfolgt über ein Stellglied. Der Waagebalken soll so ausgeführt sein, dass der Pedalweg für den Fahrer unabhängig vom Verhältnis der Kraftverteilung ist. Unabhängig von der Position des Angriffspunktes soll sich die gleiche Stellung des Bremspedals ergeben.

Abhängig von der aktuellen Rekuperationsleistung kann die Position des Angriffspunktes voreingestellt sein. Ober einen Wegsensor am Bremspedal wird bei einer Betätigung der Weg und somit die Sollverzögerung des Fahrzeuges ermittelt. Dementsprechend kann eine Verteilung der erforderlichen Bremsmomente auf das hydraulisch-mechanische und das regenerative Bremssystem erfolgen.

In einer weiteren vorteilhaften Ausgestaltung der Vorrichtung ist eine Verteilung der vom Fahrer aufgebrachten Bremskraft durch verdrehbare Kurvenscheiben vorgesehen. Zwei nebeneinander, vorzugsweise parallel angeordnete Kurvenscheiben sind durch ihre Drehachse mit dem Bremspedal verbunden, wobei sich die Drehachse beim Betätigen des Bremspedals mitbewegt. Auf der Kurvenbahn der ersten Scheibe stützt sich eine Verbindung zum Bremskraftverstärker und auf der zweiten Scheibe eine Verbindung zur Simulatoreinheit ab.

Die Kurven der beiden Scheiben sind so ausgestaltet, dass die Summe der Auslenkung der Kurven gegenüber der Achsen der beiden Scheiben stets konstant ist. Mit anderen

Worten ist der Verlauf der Kurven, die auf den beiden Scheiben aufgebracht sind gegenläufig, wobei der Betrag der Veränderung der Auslenkung der beiden Scheiben gleich ist. Bei nichtbetätigtem Bremspedal befinden sich die beiden Kurvenscheiben in einer Nulllage. Die Nulllage kann zum Beispiel so gewählt werden, dass eine Gleichverteilung der Bremskraft zwischen Bremskraftverstärker und Simulator-Einheit erfolgt. Während der Betätigung des Bremspedals können die Kurvenscheiben synchron verdreht werden so dass sich zum Beispiel die Amplitude der ersten Scheibe bezüglich der Drehachse vergrößert und sich somit der Betätigungsweg des Bremskraftverstärkers zusätzlich zum Bremspedalweg erhöht. Durch die gegenläufige Kontur der beiden Scheiben wird die Amplitude der zweiten Scheibe verringert, wodurch sich der Betätigungsweg an der Simulatoreinheit gegenüber dem Bremspedalweg verringert. Dadurch kann eine variable Verteilung der Bremskraft erfolgen, wobei die Summe der Gegenkräfte am Bremspedal konstant bleiben und sich somit ein gleichbleibendes Bremsgefühl realisieren lässt.

Weiterhin ist die Verteilung der Bremskraft auch durch eine Kurvenscheibe, die in ihrer Funktionsweise einer Taumeischeibe entspricht realisierbar. Die Achse der verdrehbaren Taumelscheibe ist dazu parallel oder zumindest in Richtung der Betätigung von Bremskraftverstärker und Simulatoreinheit angeordnet. Auf der Oberfläche der Taumelscheibe, also in axialer Richtung zur Scheibe, auf der die Verstellkontur aufgebracht ist, stützt sich die Betätigung für den Bremskraftverstärker einerseits und die Betätigung für die Simulator-Einheit andererseits zur Verdrehachse ab. Durch die Verdrehung der. Taumelscheibe während der Betätigung des Bremspedals wird analog zum Kurvenscheibenmechanismus der Betätigungsweg, der auf den Bremskraftverstärker und die Simulatoreinheit wirkt, gegenüber den Bremspedalweg verändert.

In einer weiteren vorteilhaften Ausgestaltung der Vorrichtung ist jeweils eine starre Verbindung zwischen dem Bremspedal und dem Bremskraftverstärker sowie zwischen Bremspedal und Simulator-Einheit vorgesehen. Die Verbindungen sind dabei in einer vorteilhaften Ausgestaltung als einseitig gelagerte Schwenkhebel ausgeführt. Der Angriffspunkt der Verbindungen am Bremspedal ist verstellbar, so das sich der Abstand des Angriffspunkt gegenüber dem Drehpunkt des Bremspedals verändert. Dadurch wird der Betätigungshebel und somit der Betätigungsweg verändert. Die Verstellung des Abstands des Angriffspunktes zum Drehpunkt des Bremspedals wird über ein Stellglied realisiert. So kann die Bremskraftverteilung variabel eingestellt werden indem zum Beispiel durch die Verringerung des Abstandes des Angriffspunktes zum Pedaldrehpunkt der Betätigungsweg des Bremskraftverstärkers reduziert wird und gleichzeitig der Abstand des Angriffspunktes der Verbindung zur Simulator-Einheit entsprechend vergrößert wird und sich somit der Betätigungsweg erhöht. Da sich durch die Veränderung des Hebelarmes, der sich durch den Abstand des jeweiligen Angriffspunkt zum Bremspedaldrehpunkt ergibt, auch eine Veränderung der resultierenden Betätigungskraft ergibt, ist der Kraftausgleich durch die Simulator-Einheit dementsprechend anzupassen. Mit anderen Worten ist der Betrag der Veränderung des Abstands der beiden Angriffspunkte gegenüber dem Pedaldrehpunkt der beiden Verbindungen nicht gleich.

Das in seiner Übersetzung variable System schafft in vorteilhafter Weise eine Möglichkeit, ein gleichbleibendes Verzögerungsverhalten in Relation zum Betätigungsweg des Bremspedalwegs zu realisieren, unabhängig davon, in welchem Maße eine Rekuperation durchgeführt wird. Das System benötigt weder ein Brake-By-Wire-Bremssystem, noch einen aufwändigen Pedalsimulator, der ausgehend von der Bremsleistung ein auf das Fahrerempfinden abgestimmtes Widerstandsmoment erzeugt.

Ein weiterer Vorteil ist die permanent vorhandene Rückfallebene. Das Verhältnis der Kraftverteilung kann so begrenzt werden, dass eine permanente mechanische Verzögerung entsprechend den gesetzlichen Anforderungen vorhanden ist. Des Weiteren wird die Verstellung bei einem stromlosen Stellglied stets in die Position gezwungen, die eine maximale Betätigung der hydraulischen Betriebsbremse nach sich zieht.

Im Gegensatz zu einer klassischen parallelen Rekuperation wird das Spektrum der rückgewinnbaren Energie erhöht, da das konventionelle Bremsen reduziert werden kann.

Zusätzlich zu der verbesserten parallelen Rekuperation besteht die Möglichkeit, die Bremskraft zu 100% auf die Simulator-Einheit zu leiten und somit eine serielle Rekuperation zu ermöglichen. Dadurch können innerhalb eines Bremssystems die Vorteile beider Systeme vereint werden.

Die Verstellsysteme mit einer Simulator-Einheit zur variablen Verteilung der Bremskraft zwischen der Betriebsbremse und der Simulator-Einheit können sich sowohl zwischen dem Bremspedals und dem Bremskraftverstärker als auch direkt im Bremskreis der Betriebsbremse befinden. Die Steuerung der Verstellsysteme insbesondere der Stellglieder kann durch elektronische Steuerungen erfolgen.

## Ausführungsbeispiel Waagebalken am Bremspedal

Beispielhaft wird hier eine Ausführung der erfindungsgemäßen Vorrichtung dargestellt, In der dazugehörigen Figur zeigt:

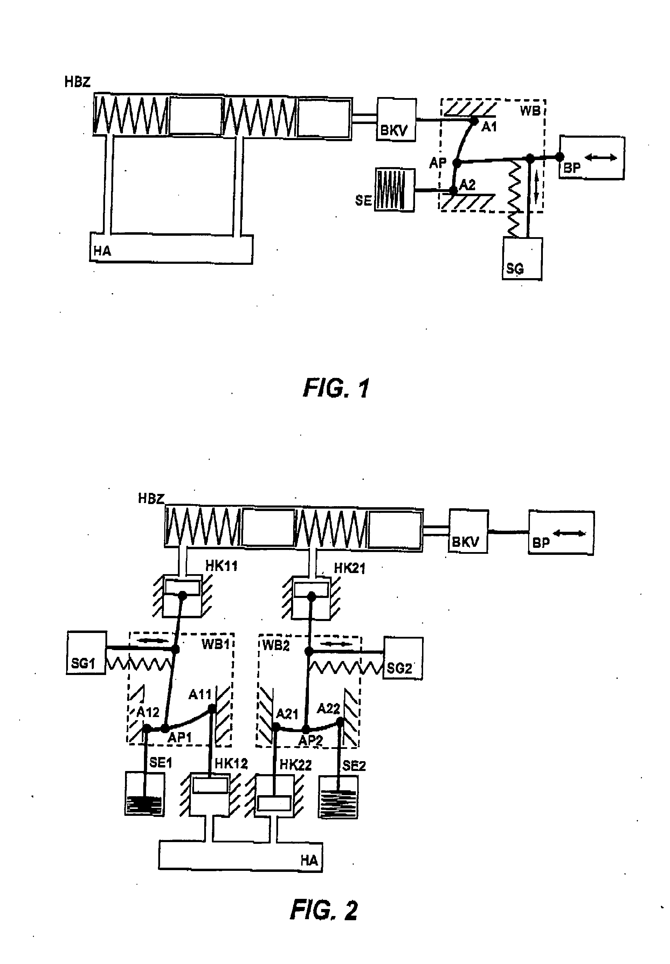

**Fig. 1:** eine schematische Darstellung der Vorrichtung am Bremspedal.

Das in Fig. 1 dargestellte System besteht aus einem Hebelsystem, dessen Elemente einen Waagebalken **WB** aufweisen, welcher zwischen einem Bremspedal BP und einem Bremskraftverstärker **BKV** integriert ist.

Die vom Fahrer auf das Bremspedal **BP** ausgeübte Kraft wird direkt auf den Waagebalken **WB** gegeben. Der Angriffspunkt **AP** dieser Kraft kann durch ein Stellglied SG verschoben werden, wodurch das Verhältnis der Kräfte, welche auf die beiden Abgriffspunkte **A1** und **A2** wirken, beeinflusst wird.

Dabei ist ein Abgriffspunkt **A1** mit dem Bremsgestänge verbunden, über welches dieser Anteil der Kraft in den Bremskraftverstärker **BKV** eingeprägt wird und somit zu einer Bremsung über das hydraulische Bremssystem führt.

Der zweite Abgriffspunkt **A2** ist mit einer Simulator-Einheit **SE** gekoppelt, welche den Teil der Kraft aufnimmt, der nicht über den Bremskraftverstärker **BKV** und den Hauptbremszylinder **HBZ** in Form eines Druckes an die Radbremskolben über das Hydraulikaggregat **HA** weitergeleitet werden soll. Durch die entstehende Gegenkraft in der Simulator-Einheit SE wird dem Fahrer ein Pedalgefühl vermittelt, welches unabhängig vom Druck im Hauptbremszylinder **HBZ** ist.

Soll für eine angeforderte Verzögerung ein elektrisches Bremsmoment aufgebracht werden, so wird das Übersetzungsverhältnis des Hebelsystems verändert, indem das Längenverhältnis des Angriffspunktes **AP** des Waagebalkens **WB** zu den Abgriffspunkten **A1, A2** so variiert wird, dass ein Teil der Pedalkraft in die Simulator-Einheit SE geleitet wird. Der dadurch reduzierte Druck im Hauptbremszylinder **HBZ** führt zu einer reduzierten mechanischen Verzögerung des Fahrzeuges. Die Differenz zwischen dem angeforderten Bremswunsch und der Fahrzeugverzögerung, welche durch die hydraulische Betriebsbremse umgesetzt wird, wird durch die Ansteuerung der elektrischen Maschinen und der daraus folgenden Rekuperation kompensiert. Das Pedalgefühl ist dabei unverändert gegenüber einer rein mechanischen Verzögerung.

Wird für den gewünschten Bremsvorgang kein elektrisches Bremsmoment angefordert, so wird die Pedalkraft vollständig an den Bremskraftverstärker **BKV** geleitet. Das Fahrzeug wird ausschließlich über die konventionelle Bremse verzögert.

## Ausführungsbeispiel Waagebalken in der Steuerleitung

Beispielhaft wird hier eine Ausführung der erfindungsgemäßen Vorrichtung dargestellt. In der dazugehörigen Figur zeigt:

**Fig. 2:** eine schematische Darstellung der Vorrichtung in der Steuerleitung.

Das in Fig. 2 dargestellte System, bestehend aus zwei Waagebalken **WB1** und **WB2,** soll zwischen dem Hauptbremszylinder **HBZ** und dem Hydraulikaggregat **HA** integriert werden. Dabei wird an jeder Steuerleitung ein Waagebalken **WB1** / **WB2** verbaut. Über einen Hydraulikkolben **HK11** / **HK21** wird der Druck aus dem Hauptbremszylinder **HBZ** in eine Kraft gewandelt, welche auf den Waagebalken **WB1** / **WB2** wirkt. Der Angriffspunkt, **AP1 / AP2,** dieser Kraft kann durch ein Stellglied **SG1 / SG2** verschoben werden, wodurch das Verhältnis der Kräfte, welche auf die beiden Abgriffspunkte **A11** und **A12 / A21 und A22** wirken, beeinflusst wird. Dabei ist ein Abgriffspunkt **A11** / **A21** über einen Hydraulikkolben **HK12 / HK22** wiederum mit der Steuerleitung zum Hydraulikaggregat **HA** verbunden, über welchen der aus der Teilkraft resultierende Druck in dieses eingeprägt wird.

Der zweite Abgriffspunkt **A12 / A22** ist mit einer Simulator-Einheit **SE1 / SE2** gekoppelt, welche den Teil der Kraft aufnimmt, welcher nicht in Form eines Druckes an die Radbremskolben weitergeleitet werden soll. Die entstehende Gegenkraft in der Simulator-Einheit **SE1 / SE2** vermittelt dem Fahrer ein Pedalgefühl, welches unabhängig von dem Druck an den Radbremskolben ist.

Soll für eine angeforderte Verzögerung ein elektrisches Bremsmoment aufgebracht werden, so wird das Längenverhältnis des Waagebalkens **WB1 / WB2** so variiert, dass ein Teil der Pedalkraft in die Simulator-Einheit **SE1 / SE2** geleitet wird. Der dadurch reduzierte Druck an den Radbremskolben führt zu einer reduzierten mechanischen Verzögerung des Fahrzeuges. Die Differenz zwischen dem angeforderten Bremswunsch und der Fahrzeugverzögerung, welche durch die hydraulische Betriebsbremse umgesetzt wird, wird durch die Ansteuerung der elektrischen Maschinen im Generatorbetrieb und der daraus folgenden Rekuperation kompensiert. Das Pedalgefühl ist dabei unverändert gegenüber einer rein mechanischen Verzögerung. Durch die Anordnung des Verstellsystems in der Steuerleitung ist es beispielsweise möglich, die Verteilung der Bremskraft zwischen der hydraulischen Betriebsbremse und Simulator-Einheit für jede Antriebachse eines zweiachsig angetrieben Fahrzeugs dem regenerativen Bremsmoment der jeweiligen Achse unabhängig voneinander anzupassen, so dass das erforderliche Gesamtbremsmoment erzeugt wird.

Wird für den gewünschten Bremsvorgang kein elektrisches Bremsmoment angefordert, so wird die Pedalkraft vollständig als Druck in das Hydraullkaggregat **HA** geleitet. Das Fahrzeug wird nur über die konventionelle Bremse verzögert.

## Ausführungsbeispiel Hebelsystem

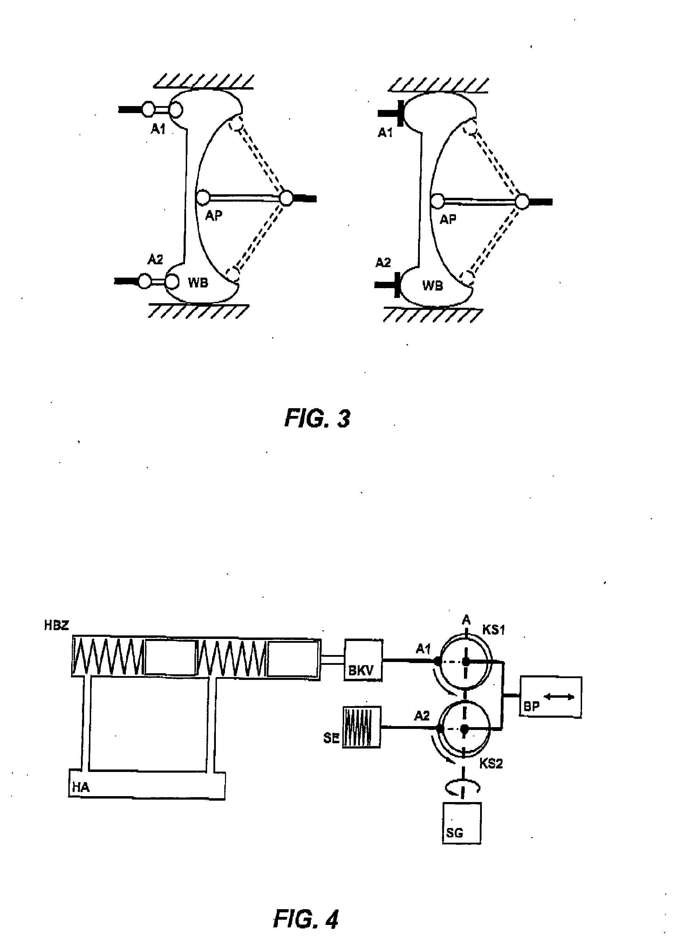

**Fig. 3:** eine schematische Darstellung eines Hebelsystems.

Fig. 3 zeigt eine mögliche Ausführung des Hebelsystems, bei welchem ein vom Bremspedal **BP** kommender Gestängeteil sich am Angriffspunkt **AP** des Waagebalkens **WB** abstütz. Der Waagebalken **WB** ist in einer Geradführung verschieb- und kippbar. Aufgrund der runden Gestaltung der an den Außenflächen der Geradführung anliegenden Flächen des Waagebalkens **WB** wird in der gezeigten zur Geradführung senkrechten Betätigungsposition sowie in einem aus dieser verkippten Zustand eine spielfreie Führung des Waagebalkens **WB** In der Geradführung gewährleistet. In der gezeigten Stellung des vom Bremspedal **BP** kommenden Gestängeteils befindet sich der Angriffspunkt **AP** mittig zwischen den Abgriffspunkten **A1** und **A2.**

Die Betätigungskraft am Angriffspunkt **AP** wirkt gleichermaßen auf die Abgriffspunkte **A1** und **A2.** Strichliert dargestellt sind zwei Extrempositionen für den Angriffspunkt **AP,** in denen die Kraft jeweils nur auf einen der Abgriffspunkte **A1** und **A2** übertragen wird. Die Kraftübertragung an die nachfolgenden Elemente erfolgt dabei über gelenkige Verbindungen oder Abstützungen wie in beiden Ausführungsformen der Figur 3 dargestellt. Die Position des zum Bremspedal **BP** führenden Gestängeteils bleibt dabei unverändert, unabhängig davon, In welcher Position sich der Angriffspunkt **AP** befindet. Es wird durch die Formgebung des Waagebalkens **WB** entlang der möglichen Angriffspunkte **AP,** welche die Auflagekurve für die vom Bremspedal kommenden Gestängeteile bilden, eine vom Auflagepunkt unabhängige gleichbleibende Position des Bremspedals **BP** sichergestellt.

**Ausführungsbeispiel Kurvenscheiben**

Beispielhaft wird hier eine Ausführung der erfindungsgemäßen Vorrichtung dargestellt. In den dazugehörigen Figuren zeigt:

**Fig. 4:** eine schematische Darstellung der Vorrichtung mit Kurvenscheiben und

**Fig. 5:** eine schematische Darstellung einer weiteren vorteilhaften Ausgestaltung der Vorrichtung mit Kurvenscheiben.

Das System besteht aus einem Kurvenscheibensystem, dessen Kurvenscheiben **KS1** und **KS2** mittels eines Stellgliedes **SG** verdrehbar sind und dadurch den Betätigungsweg für den Bremskraftverstärker **BKV** und die Simulator-Einheit SE verstellen.

Das Kurvenscheibensystem mit den beiden Kurvenscheiben **KS1** und **KS2** ist zwischen dem Bremspedal **BP** und dem Bremskraftverstärker **BKV** beziehungsweise der Simulator-Einheit **SE** angeordnet. Die Achse **A**, auf denen die beiden Kurvenscheiben **KS1** und **KS2** angeordnet sind, ist mit dem Bremspedal **BP** verbunden und ist in vorteilhafter Ausgestaltung senkrecht zur Betätigungsrichtung angeordnet. Bei einer Betätigung des Bremspedals **BP** wird die Achse **A** und somit auch die Kurvenscheiben **KS1** und **KS2** mitbewegt. Die beiden Kurvenscheiben **KS1** und **KS2** zeichnen sich durch einen vorbestimmten Radienverlauf bezüglich der Achse A auf deren Umfang aus. Die erste Kurvenscheibe **KS1** steht über eine starre Verbindung und einem Abgriffspunkt **A1** mit dem Bremskraftverstärker **BKV** in Verbindung. Die zweite Kurvenscheibe **KS2** steht über eine starre Verbindung und einem Abgriffspunkt **A2** mit der Simulator-Einheit **SE** In Verbindung. Über das Stellglied **SG** können die beiden Kurvenscheiben **KS1** und **KS2** verdreht werden, so dass sich die Abgriffspunkte **A1** und **A2** in Richtung der Betätigungsrichtung des Bremskraftverstärkers **BKV** und der Simulator-Einheit **SE** verschieben. Mit anderen Worten wird durch die Verdrehung der Kurvenscheiben **KS1** und **KS2** der Radius, an dem die Abgriffspunkte **A1** und **A2** an der Kurve der Kurvenscheiben **KS1** und **KS2** anliegen, verändert. Dadurch verändert sich auch der Betätigungsweg, der durch die Betätigung des Bremspedals **BP** erzeugt wird. Die Verstellung des Betätigungsweges erfolgt während der Betätigung des Bremspedals **BP.** Ist das Bremspedal **BP** nicht Betätigt, befinden sich die Kurvenscheiben **KS1** und **KS2** in einer Nullstellung. Soll zum Beispiel der Anteil der hydraulischen Betriebsbremse am Gesamtbremsmoment verringert werden, werden die Kurvenscheiben **KS1** und **KS2** über das Stellglied **SG** so verdreht, dass der Betätigungsweg, der durch das Bremspedal **BP erzeugt** wurde, durch verdrehen der Kurvenscheibe **KS1** auf der Seite des Bremskraftverstärkers **BKV** verringert wird. Dementsprechend wird für das gleichbleibende Pedalgefühl für den Fahrer durch die Kurvenscheibe **KS2** der Betätigungsweg gegenüber der Simulator-Einheit SE erhöht. Die Summe der Bremskräfte aus dem Bremskraftverstärker **BKV** und der Simulator-Einheit **SE**, die auf das Bremspedal **BP** wirken, ist konstant und es ergibt sich ein gleichbleibendes Bremsgefühl für den Fahrer.

In einer weiteren vorteilhaften Ausgestaltung des Ausführungsbeispiels kann jeder der beiden Kurvenscheiben **KS1** und **KS2** durch ein separates Stellglied **SG1** und **SG2** verdreht werden, so dass die Verstellung der Kurvenscheiben **KS1** und **KS2** unabhängig voneinander erfolgen kann. Dadurch kann erreicht werden, dass die Summe der aufgeteilten Bremskraft aus der Bremskraft am Bremskraftverstärker **BKV** und der Simulator-Einheit **SE** nicht konstant ist. Die Bremskraft am Bremspedal **BP** kann gegenüber einer Bremskraft, die im Verhältnis zum gesamten Bremsmomentes des Fahrzeugs steht, verringert oder verstärkt werden.

**Ausführungsbeispiel Taumelscheibe**

Beispielhaft wird hier eine Ausführung der erfindungsgemäßen Vorrichtung dargestellt. In der dazugehörigen Figur zeigt:

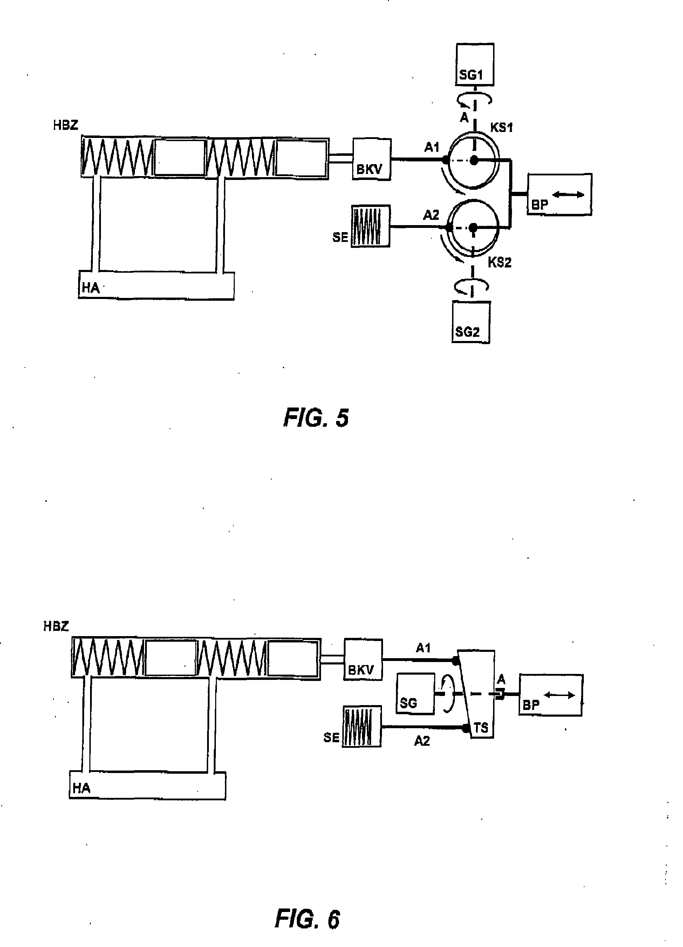

Fig. 6: eine schematische Darstellung der Vorrichtung mit einer Taumelscheibe.

Das System besteht aus einem Taumelscheibensystem, dessen Taumelscheibe **TS** mittels eines Stellgliedes **SG** verdrehbar ist und dadurch den Betätigungsweg für den Bremskraftverstärker **BKV** und die Simulator-Einheit **SE** verstellt.

Das Taumelscheibensystem mit der Taumelscheibe **TS** ist zwischen dem Bremspedal **BP** und dem Bremskraftverstärker **BKV** beziehungsweise Simulator-Einheit **SE** angeordnet. Die Achse **A** der Taumelscheibe **TS** ist mit dem Bremspedal **BP** verbunden und ist in einer vorteilhaften Ausgestaltung parallel zur Betätigungsrichtung angeordnet. Die Taumelscheibe **TS** zeichnet sich durch unterschiedliche Scheibenstärken in axialer Richtung über dem Umfang aus. Auf der Taumelscheibe **TS** sind in axialer Richtung die starren Verbindungen mit den Abgriffspunkten **A1** und **A2** abgestützt. Der Abgriffspunkt **A1** ist über einer erste starre Verbindung mit dem Bremskraftverstärker **BKV** und der Abgriffspunkt **A2** über eine zweite starre Verbindung mit der Simulator-Einheit **SE** verbunden. Durch eine Verdrehung der Taumelscheibe **TS** werden die Abgriffspunkte **A1** und **A2** in Betätigungsrichtung verstellt, wodurch sich eine Verringerung oder Erhöhung des Betätigungsweges relativ zum Bremspedalbetätigungsweg ergibt. Analog zum Kurvenscheibensystem wird während der Betätigung des Bremspedals **BP** die Taumelscheibe **TS** entsprechend der Bremskraftverteilung verdreht, so dass sich der Betätigungsweg, der durch das Bremspedal **BP** erzeugt wurde, für den Bremskraftverstärker **BKV** und der Simulator-Einheit SE einstellt.

**Ausführungsbeispiel verstellbarer Hebelarm**

Beispielhaft wird hier eine Ausführung der erfindungsgemäßen Vorrichtung dargestellt. In den dazugehörigen Figuren zeigt:

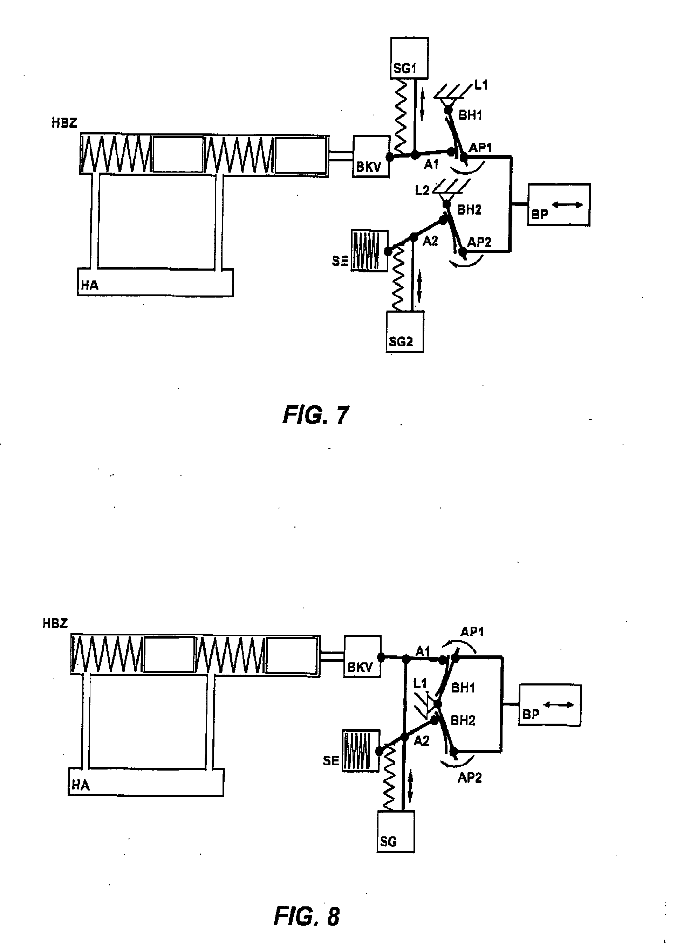

**Fig. 7:** eine schematische Darstellung der Vorrichtung mit verstellbaren Hebelarmen und

**Fig. 8:** eine schematische Darstellung einer weiteren vorteilhaften Ausgestaltung der Vorrichtung mit verstellbaren Hebelarmen.

Das System besteht aus einem Hebelsystem, wobei zwei verstellbare Bremshebel **BH1** und **BH2** vorgesehen sind, die über zwei Stellglieder **SG1** und **SG2** verstellt werden können und dadurch die Betätigungskraft und der Betätigungsweg, der durch ein Bremspedal **BP** erzeugt wurde, variabel auf einen Bremskraftverstärker **BKV** und eine Simulator-Einheit **SE** verteilen.

Das Hebelsystem ist zwischen dem Bremspedal und dem Bremskraftverstärker **BKV** beziehungsweise der Simulator-Einheit **SE** angeordnet. Es sind zwei Bremshebel **BH1** und **BH2** vorgesehen, die jeweils in einem Lager **L1** und **L2** drehbar gelagert sind. Durch jeweils einen Angriffspunkt **AP1** und **AP2** sind die Bremshebel **BH1** und **BH2** mit dem Bremspedal **BP** verbunden. Weiterhin ist der erste Bremshebel **BH1** über eine verstellbare starre Verbindung und dem Abgriffspunkt **A1** mit dem Bremskraftverstärker **BKV** verbunden. Der zweite Bremshebel **BH2** ist über einer weitere verstellbare starre. Verbindung und dem Abgriffspunkt **A2** mit der Simulator-Einheit **SE** verbunden. Beide starre Verbindungen können über eine jeweiliges Stellglied **SG1** und **SG2** verstellt werden, so dass sich der Abstand des Abgriffspunktes **A1** beziehungsweise **A2** auf dem Bremshebel **BH1** beziehungsweise **BH2** gegenüber des Drehpunktes im Lager **L1** beziehungsweise **L2** verändert. Dadurch wird der Betätigungsweg und die Betätigungskraft, die durch das Bremspedal **BP** aufgebracht wird, verändert. Soll zum Beispiel der Betätigungsweg am Bremskraftverstärker **BKV** aufgrund der geforderten Bremskraftverteilung vergrößert werden, so muss der Abstand das Abgriffspunktes **A1** zum Drehpunkt im Lager **L1** und somit der Drehradius das Abgriffspunktes **A1** vergrößert werden. Durch die Verwendung von zwei Stellgliedern **SG1** und **SG2** ist es möglich, die Bremskraft am Bremspedal **BP,** die der Fahrer aufbringen muss, zu verstärken. Die Stellglieder **SG1** und **SG2** können dafür die Abgriffpunkte **A1** und **A2** unabhängig voneinander so einstellen, dass die Summe der Kräfte am Bremspedal **BP** nicht konstant ist. Die Bremskraft am Bremspedal BP kann gegenüber einer Bremskraft, die im Verhältnis zum gesamten Bremsmomentes des Fahrzeugs steht, verringert oder verstärkt werden.

In einer weiteren vorteilhaften Ausgestaltung des Ausführungsbeispiels können die beiden Stellglieder **SG1** und **SG2** zu einem Stellglied zusammengefasst werden. Dazu wird das Hebelsystem den geänderten Anforderungen so angepasst, dass eine Verstellung derAbgriffspunkte **A1** und **A2** abhängig voneinander erfolgt und das Bremskraftverteilungsverhältnis so vorgegeben wird, dass die Bremskraft am Bremspedal **BP** aus der Summe der Kraft am Bremskraftverstärker **BKV** und an der Simulator-Einheit **SE** konstant ist.

**Bezugszeichenliste**

| | |
|---|---|
| **A** | Achse |
| **A1; A2; A11; A12; A21; A22** | Abgriffspunkt |
| **AP; AP1 AP2** | Angriffspunkt |
| **BH1; BH2** | Bremshebel |
| **BKV** | Bremskraftverstärker |
| **BP** | Bremspedal |

| | |
|---|---|
| **HA** | Hydraulikaggregat |
| **HBZ** | Hydraulikbremszylinder |
| **HK11; HK12; HK21; HK22** | Hydraulikkolben |
| **KS1; KS2** | Kurvenscheibe |
| **L1; L2** | Lager |
| **SE; SE1; SE2** | Simulatoreinheit |
| **SG; SG1; SG2** | Stellglied |
| **TS** | Taumelscheibe |
| **WB; WB1; WB2** | Waagebalken |

**Patentansprüche**

1. Vorrichtung zur Verteilung einer vom Fahrer über ein Bremspedal (BP) erzeugten Bremskraft in einem hydraulisch-mechanischen Bremssystem, bei der ein Verstellsystem verwendet wird, das über wenigstens einen Angriffspunkt (AP) und wenigstens zwei Abgriffspunkte (A1, A2) verfügt, wobei das Verteilungsverhältnis der Bremskraft und / oder des Betätigungsweges des Verstellsystems durch Verlagern von Angriffs- (AP) und/oder Abgriffspunkten (A1, A2) einstellbar ist, **dadurch gekennzeichnet, dass** sich mindestens ein Abgriffspunkt (A2) des Verstellsystems mit der aus dem Verteilungsverhältnis resultierenden Kraft und / oder Betätigungsweg in mindestens einer Simulator-Einheit (SE) abstützt.

2. Vorrichtung zur Verteilung einer Bremskraft nach Patentanspruch 1, **dadurch gekennzeichnet, dass** mindestens über wenigstens einen Abgriffspunkt (A1) des Verstellsystems eine vom Fahrer über ein Bremspedal (BP) erzeugte Bremskraft in ein mechanisch hydraulisches Bremssystem einleitbar ist.

3. Vorrichtung zur Verteilung einer Bremskraft nach einem der vorherigen Ansprüche, **dadurch gekennzeichnet, dass** der wenigstens eine Angriffspunkt (AP) des Verstellsystems über wenigstens ein Stellglied variabel einstellbar ist, so dass sich dadurch unterschiedliche Hebelverhältnisse und / oder Betätigungswege gegenüber den wenigstens zwei Abgriffspunkten (A1, A2) ergeben.

4. Vorrichtung zur Verteilung einer Bremskraft nach einem der vorherigen Ansprüche, **dadurch gekennzeichnet, dass** die wenigstens zwei Abgriffspunkte (A1, A2) des Verstellsystems über,wenigstens ein Stellglied variabel einstellbar ist, so dass sich dadurch unterschiedliche Hebelverhältnisse und / oder Betätigungswege gegenüber dem wenigstens einen Angriffspunkt (AP) ergeben.

5. Vorrichtung zur Verteilung einer Bremskraft nach einem der vorherigen Ansprüche, **dadurch gekennzeichnet, dass** das Verteilungsverhältnis über wenigstens einen Waagebalken und / oder wenigstens einer Kurvenscheibe und / oder wenigstens einer Taumelscheibe und / oder wenigstens einen Schwenkhebel einstellbar ist.

6. Vorrichtung zur Verteilung einer Bremskraft nach einem der vorherigen Ansprüche, **dadurch gekennzeichnet, dass** das Verstellsystem zwischen dem Bremspedal (BP) und dem Bremskraftverstärker (BKV) und / oder im hydraulischen Bremskreis angeordnet ist und mit wenigstens einem Hydraulikkolben verbunden ist, der einen Hydraulikdruck in eine Kraft umwandelt.

7. Vorrichtung zur Verteilung einer Bremskraft nach einem der vorherigen Ansprüche, **dadurch gekennzeichnet, dass** das Verstellsystem eine Reduzierung der Bremskraft, die in das Bremssystem eingeleitet wird, zwischen null und einhundert Prozent ermöglicht.

8. Vorrichtung zur Verteilung einer Bremskraft nach einem der vorherigen Ansprüche, **dadurch gekennzeichnet, dass** das Verstellsystem so ausgeführt ist, dass der Pedalweg für den Fahrer unabhängig vom Verhältnis der Kraftverteilung ist.

9. Vorrichtung zur Verteilung einer Bremskraft nach einem der vorherigen Ansprüche, **dadurch gekennzeichnet, dass** eine Sicherheitssystem vorgesehen ist, das bei einem Ausfall des Verstellsystems ein größtmögliches Bremsmoment bei Betätigung der Betriebsbremse ermöglicht.

**FIG. 1**

**FIG. 2**

**FIG. 3**

**FIG. 4**

HBZ

SG1

A

KS1

A1

BKV

SE

A2

BP

KS2

SG2

**FIG. 5**

HA

HBZ

A1

BKV

SG

A

SE

A2

TS

BP

HA

**FIG. 6**

**FIG. 7**

**FIG. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2453573 C2
- DE 102007037357 A1
- JP 3775109 B